# EUROPÄISCHE PATENTANMELDUNG

(11) **EP 2 455 667 A2**
(43) Veröffentlichungstag der Anmeldung: **23.05.2012**
(21) Anmeldenummer: 11187440.0
(22) Anmeldetag: 02.11.2011
(51) Int. Cl.: F24C 7/08, G06F 3/033, A47L 15/42, D06F 39/00

(54) **Bedienvorrichtung für ein Hausgerät sowie Hausgerät, insbesondere zum Zubereiten von Lebensmitteln mit einer Bedienvorrichtung**

(30) Priorität: 12.11.2010 DE 102010043847
(71) Anmelder: BSH Bosch und Siemens Hausgeräte GmbH, 81739 München (DE)
(72) Erfinder: Grobleben, Ralf, 75015 Bretten (DE); Grützke, Joachim, 85560 Ebersberg (DE); Knöller, Thomas, 86356 Neusäß (DE)

(57) **Zusammenfassung**

Die Erfindung betrifft eine Bedienvorrichtung für ein Hausgerät (1), welche ein Bedienelement (11) aufweist, das in einer Aufnahme (14) der Bedienvorrichtung (10) bewegbar angeordnet ist und abhängig von einer definierten Bewegung des Bedienelements (11) in der Aufnahme (14) eine Betriebsbedingungseinstellung des Hausgeräts (1) durchführbar ist, **dadurch gekennzeichnet, dass** das Bedienelement ein plattenförmiges Streifenelement (11) ist, welches eine bogenförmige Frontseite (16) aufweist, welche sich über eine frontseitige Öffnung (15) der Aufnahme (14) nach außen erstreckt. Die Erfindung betrifft auch einen Backofen (1) mit einer entsprechenden Bedienvorrichtung (10).

## Beschreibung

Die Erfindung betrifft eine Bedienvorrichtung für ein Hausgerät, welche ein Bedienelement aufweist, dass in einer Aufnahme der Bedienvorrichtung bewegbar angeordnet ist und abhängig von einer definierten Bewegung des Bedienelements in der Aufnahme eine Betriebsbedingungseinstellung des Haushaltsgeräts durchführbar ist.

Aus dem Stand der Technik ist eine Bedienvorrichtung für ein Hausgerät, beispielsweise ein Backofen bekannt, bei der mittels einer runden Scheibe, die somit als Flachzylinder ausgebildet ist, Betriebsbedingungen des Hausgeräts eingestellt werden können. Diese Scheibe ist teilweise versenkt in einer Aufnahme der Bedienvorrichtung und somit in dem Gehäuse angeordnet und kann durch frontseitiges Berühren eines Nutzers gedreht werden, üblicherweise weiter als 360°. Diese Ausgestaltungen von Bedienvorrichtungen sind jedoch sehr bauraumintensiv. Durch die Größe der kreisrunden Scheibe erstreckt sich dieses Bedienelement sehr weit in das Innere der Bedienvorrichtung. Neben einem sehr großen Platzbedarf sind diese Bedienvorrichtungen auch in der Nutzerfreundlichkeit eingeschränkt. Denn für die Drehung um einen relativ großen Winkelbereich muss der Nutzer quasi mehrmals das Bedienelement berühren und wieder loslassen, um es an den jeweiligen Anschlägen, bei denen dann das Bedienelement in die Aufnahme und somit die Bedienvorrichtung hinein verschwindet, weiterdrehen zu können. Dies kann auch zu Fehleinstellung führen.

Es ist Aufgabe der vorliegenden Erfindung, eine Bedienvorrichtung für ein Hausgerät sowie ein Hausgerät mit einer derartigen Bedienvorrichtung zu schaffen, bei welcher bzw. bei welchem die Ausgestaltung des Bedienelements bei noch uneingeschränkter Funktionalität des Bedienelements kompakter ist und die Nutzerfreundlichkeit bei der Betätigung des Bedienelements erhöht ist.

Diese Aufgabe wird durch eine Bedienvorrichtung, welche die Merkmale nach Anspruch 1 aufweist, und ein Hausgerät, welches die Merkmale nach Anspruch 13 aufweist, gelöst.

Eine erfindungsgemäße Bedienvorrichtung für ein Hausgerät umfasst ein Bedienelement, dass in einer Aufnahme der Bedienvorrichtung bewegbar angeordnet ist. Abhängig von einer definierten Bewegung des Bedienelements in der Aufnahme ist eine Betriebsbedingungseinstellung des Hausgeräts durchführbar. Das Bedienelement ist ein plattenförmiges Streifenelement, welches eine bogenförmige Frontseite aufweist, welche sich über eine frontseitige Öffnung der Aufnahme nach außen erstreckt. Durch eine derartige Ausgestaltung ist eine besonders kompakte und dennoch sehr nutzerfreundlich und aufwandsarme Betätigung des Bedienelements erreicht.

Vorzugsweise ist das plattenförmige Streifenelement in Form eines Ringabschnitts ausgebildet. Dies ermöglicht eine besonders bauraumminimierte Ausgestaltung bei dennoch gleichbleibender hoher Funktionalität der Betätigungsmöglichkeit des Bedienelements. Gerade die Möglichkeit der Bewegungsrichtung und somit die Leichtgängigkeit des Bedienelements kann durch diese ganz spezifische Formgestaltung des Bedienelements besonders begünstigt werden. Bei sehr klein bauender Ausgestaltung kann die quasi Drehbewegung um einen Radius beibehalten werden.

Vorzugsweise ist vorgesehen, dass dieser Drehbewegungssektor, innerhalb dem das Bedienelement um den Mittelpunkt bezüglich des Radius der bogenförmigen Frontseite drehbar ist, dem Bereich entspricht, mit dem sich die bogenförmige Frontseite in seiner Grundstellung aus der Aufnahme der Bedienvorrichtung herauserstreckt. Dies bedeutet, dass somit quasi bei einem Berühren der Frontseite an einem Ende, das direkt aus der Aufnahme an einem ersten Aufnahmerand der Bedienvorrichtung heraustritt, die Bewegung des Bedienelements um eine derartige Strecke möglich ist, bis dieses erste Ende der Frontseite an dem gegenüberliegenden Aufnahmerand wieder in die Aufnahme der Bedienvorrichtung nach innen eintaucht. Der Nutzer muss somit über die gesamte Betätigungsstrecke, die das Bedienelement maximal durchführen kann, nicht mehrmals absetzen und das Bedienelement erneut an der Frontseite berühren, um weiterdrehen zu können. Vielmehr kann er mit einer einzigen Berührung und Drehung des Bedienelements die gesamte maximale Bewegungsstrecke des Bedienelements durchlaufen bzw. betätigen.

Vorzugsweise ist vorgesehen, dass das Bedienelement in der Aufnahme in einer ersten Ebene bewegbar ist, welche durch die Ebene, in der sich das Streifenelement erstreckt, gebildet ist. Durch eine derartige Ausgestaltung wird praktisch erreicht, dass das sehr flachbauende und plattenförmige Streifenelement, welches insbesondere einen Ringabschnitt darstellt, um eine Achse drehbar ist, die quasi die fiktive Längsachse dieses Ringabschnitts um einen Mittelpunkt des Radius der bogenförmigen Frontseite darstellt.

Insbesondere ist somit dieses plattenförmige Streifenelement auf einer Bogenbahn bewegbar, um eine Betriebsbedingungseinstellung durchführen zu können.

Vorzugsweise ist vorgesehen, dass die Bewegungsmöglichkeit in der ersten Ebene eine Schwenkbewegung auf einer Bogenbahn ist.

Besonders vorteilhaft ist es, dass die Schwenkbewegung auf der Bogenbahn ausgehend von einer Grundstellung des Bedienelements beidseits jeweils um einen Winkel kleiner 60°, insbesondere kleiner 50°, insbesondere kleiner 10°, durchführbar ist.

Vorzugsweise weist das Bedienelement zumindest einen Führungszapfen auf, der zur Bewegungsführung des Bedienelements in der Aufnahme in eine Führungskulisse der Aufnahme eingreift. Insbesondere ist die Führungskulisse an der Rückseite der Aufnahme ausgebildet. Dies gewährleistet eine besonders zuverlässige Bewegung des Bedienelements auf der Bogenbahn und gewährleistet darüber hinaus auch die zuverlässige haptische Wahrnehmung der Anschläge an den Bogenbahnenden.

Besonders vorteilhaft ist es, dass das Bedienelement mittels einer Feder in einer Grundstellung der Aufnahme gehalten ist und bei einer Auslenkung in der ersten Ebene aus der Grundstellung die Feder vorgespannt wird, so dass bei Loslassen des Bedienelements eine automatische Rückstellung des Bedienelements in die Ausgangsstellung durch die Feder bewirkbar ist. Es wird somit quasi ein Automatismus geschaffen, der das Bedienelement definiert und immer wieder in die Grundstellung rückführt. Dadurch können ebenfalls Fehleinstellungen vermieden werden. Vorzugsweise ist vorgesehen, dass das Bedienelement in der Aufnahme einer zweiten Ebene bewegbar ist, welche senkrecht zu der Ebene, in der sich das Streifenelement erstreckt, orientiert ist. Zusätzlich zur Bewegung in der ersten Ebene kann somit insbesondere auch eine zweite Bewegungsmöglichkeit, insbesondere in Form eines Kippens nach oben oder unten gewährleistet werden. Das plattenförmige Streifenelement bzw. insbesondere der Ringabschnitt können dadurch auch nach oben gekippt oder nach unten gekippt werden, um Betriebsbedingungseinstellungen durchzuführen.

Als Betriebsbedingungseinstellungen werden sowohl das Auswählen von Funktionsteileinheiten des Hausgeräts als auch das Einstellen von Betriebsparametern derartiger Funktionsteileinheiten verstanden. Ebenso kann als Betriebsbedingungseinstellung das ein- oder ausschalten des Hausgeräts als auch die Einstellung einer Timerfunktion darunter verstanden werden.

Vorzugsweise ist vorgesehen, dass die Bewegungsmöglichkeiten in einer zweiten Ebene eine Kippbewegung ist.

Insbesondere ist vorgesehen, dass die Kippbewegung innerhalb eines Winkelintervalls kleiner 30°, insbesondere kleiner 15° erfolgt. Ausgehend von einer horizontalen Grundstellung kann somit vorzugsweise ein Kippen um einen maximalen Winkel von 10° nach oben und einen Winkel maximal 10° nach unten erfolgen.

Insbesondere ist vorgesehen, dass auch bei dieser Bewegungsmöglichkeit in der zweiten Ebene das Bedienelement zumindest einen Führungszapfen aufweist der zur Bewegungsführung des Bedienelements in der Aufnahme in eine weitere Führungskulisse der Aufnahme eingreift. Insbesondere kann auch hier vorgesehen sein, dass mittels zumindest einer Feder das Bedienelement in einer Grundstellung gehalten ist und bei einer Auslenkung in der zweiten Ebene aus der Grundstellung die Feder vorspannbar ist, so dass bei Loslassen des Bedienelements eine automatische Rückführung des Bedienelements in die Grundstellung durch die Feder bewirkbar ist.

Bevorzugt ist vorgesehen, dass an der Frontseite des Bedienelements ein Lichtemissionsbereich ausgebildet ist. Diesbezüglich kann somit ein Beleuchten des Bedienelements an spezifischen Stellen erfolgen. Darüber hinaus können auch Informationen für einen Nutzer gezielt angezeigt werden.

Vorzugsweise ist vorgesehen, dass der Lichtemissionsbereich abhängig von einer Betätigungsart des Bedienelements aktivierbar ist und/oder abhängig von einer Betätigungsart des Bedienelements im aktivierten Zustand zur Erzeugung von Lichtsignalen unterschiedlicher Lichtfarbe und/oder gepulsten Lichtsignalen ausgebildet ist. Dadurch können ganz spezifische Informationen an den Nutzer einfach und schnell sowie intuitiv wahrnehmbar vermittelt werden.

Insbesondere ist der Lichtemissionsbereich streifenförmig ausgebildet und/oder erstreckt sich über die gesamte Breite der Frontseite.

Vorzugsweise ist vorgesehen, dass die durch die Bewegungen des Bedienelements verursachten Geräteänderungen eines Betriebsparameters des Hausgeräts in einer weiteren Anzeigeeinheit angezeigt werden.

Insbesondere wird somit ein Bedienelement als Ringabschnitt bzw. Kreisbogenelement gebildet, welches in horizontaler Auslenkung in jede Richtung vorzugsweise um einen Winkel <10° bis zu einer definierten Endposition bewegbar ist. Entlang des beschriebenen Kreisbogens und/oder an dessen Endposition befindet sich vorzugsweise zumindest ein mechanisches oder elektromechanisches Bauteil, welches es ermöglicht, dass durch das Bedienelement ausgelöste Schaltsignal zu erkennen und die damit verbundene Betriebsbedingungseinstellung, wie beispielsweise eine Werteeinstellung eines Betriebsparameters, wie beispielsweise eine Backofentemperatur, oder die Auswahl einer Betriebsfunktion oder einer Funktionsteileinheit des Backofens, wie beispielsweise eine Kochzone oder den Betrieb des Garraums, zu ermöglichen. Das Bedienelement ist vorzugsweise in beide horizontalen Richtungen federnd gelagert. So kann vorgesehen sein, dass das Bedienelement, nach dem es aus seiner Grundstellung herausbewegt wurde oder bei Erreichen des Endpunkts losgelassen wird, sich selbstständig wieder in seine mittige Ausgangsposition bzw. Grundstellung zurückbewegt. Wird hingegen das Bedienelement nach Erreichen des Schaltpunktes oder der Endposition weiterhin vom Nutzer dort gehalten, so werden bis zum Loslassen des Bedienelements fortlaufend Schaltsignale übertragen. Durch eine derartige Ausgestaltung kann dann erzielt werden, dass die Werteverstellung kontinuierlich weiterläuft, bis das Bedienelement wieder losgelassen wird. Besonders vorteilhaft ist dies dann, wenn eine größere Wertedifferenz eingestellt werden soll.

In weiterer bereits erläuterter Ausgestaltung kann auch die Bewegungsmöglichkeit in einer zweiten Ebene, und somit insbesondere in vertikaler Richtung erfolgen. Insbesondere ist hier ausgehend von einer horizontalen Grundstellung eine Kippbewegung in beide Richtungen jeweils um einen Winkel kleiner 5°, insbesondere 3° vorgesehen. Auch hier ist vorgesehen, dass an den jeweiligen gekippten Endpositionen ein mechanisches oder elektromechanisches Bauteil der Bedienvorrichtung angeordnet ist, mit welchem es ermöglicht ist, dass durch das Bedienelement ausgelöste Schaltsignal zu erkennen und die damit verbundene Betriebsbedingungseinstellung auszulösen. Die weiteren vorteilhaften Ausgestaltungen, wie sie zur Bewegungsmöglichkeit in der ersten Ebene erläutert wurden und somit in horizontaler Auslenkung gegeben sind, sind auch für diese Bewegungsmöglichkeit in der zweiten Ebene entsprechend vorgesehen. Beispielsweise kann auch hier zur Einstellung einer größeren Wertedifferenz ein Halten des Bedienelements in einer gekippten Endposition durch einen Nutzer durchgeführt werden, so dass beispielsweise eine Zeiteinstellung für größere Werte schnell und nutzerfreundlich erfolgt.

Im Hinblick auf die Beleuchtungsmöglichkeit des Bedienelements insbesondere an dessen Frontseite kann der vorzugsweise vorhandene Leuchtring bzw. Leuchtstreifen permanent beleuchtet sein, wenn das Hausgerät eingeschaltet ist. Es kann auch vorgesehen sein, dass dieser Leuchtring bzw. dieser Leuchtemissionsbereich immer dann aufleuchtet, wenn das Bedienelement horizontal oder vertikal betätigt wird. Als Lichtquellen können vorzugsweise Leuchtdioden vorgesehen sein, die dann in der Bedienvorrichtung, insbesondere in dem Bedienelement, angeordnet sind. Diese sind sehr kompakt, lichtstark und sehr energiesparend betreibbar. Es kann auch vorgesehen sein, dass das funktionale Licht dahingehend Einsatz findet, dass dem Nutzer, der eine bestimmte Einstellung an seinem Hausgerät vornimmt möchte, durch temporäres Beleuchten des Bedienelements ein Hinweis auf die vorzunehmenden Einstellungen gegeben wird.

Es kann auch vorgesehen sein, dass benachbart zu dem Bedienelement weitere Bedienelemente, beispielsweise in Form berührsensitiver Bedienfeldern oder Tasten oder dergleichen vorgesehen sind.

Des Weiteren betrifft die Erfindung ein Hausgerät, insbesondere zum Zubereiten von Lebensmitteln, insbesondere einem Backofen, mit einer erfindungsgemäßen Bedienvorrichtung bei einer vorteilhaften Ausgestaltung davon.

Weitere Merkmale der Erfindung ergeben sich aus den Ansprüchen, den Figuren und der Figurenbeschreibung. Die vorstehend in der Beschreibung genannten Merkmale und Merkmalskombinationen als auch die in den Figuren allein und/oder in der Figurenbeschreibung allein gezeigten Merkmale oder Merkmalskombinationen sind nicht nur in der jeweils angegebenen Kombination, sondern auch in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine perspektivische schematische Darstellung eines Ausführungsbeispiels eines erfindungsgemäßen Backofens;
- Fig. 2: eine vergrößerte Darstellung eines Teilausschnitts des Backofens gemäß Fig. 1 in perspektivischer Sicht;
- Fig. 3: eine Frontansicht eines Ausführungsbeispiels von Teilkomponenten einer erfindungsgemäßen Bedienvorrichtung;
- Fig. 4: eine Schnittdarstellung durch die Darstellung in Fig. 3 in einer Grundstellung des Bedienelements;
- Fig. 5: eine Schnittdarstellung durch die Ausführung in Fig. 2 in einem ersten Betätigungszustand des Bedienelements;
- Fig. 6: eine Schnittdarstellung durch die Ausführung in Fig. 3 gemäß einem zweiten Betätigungszustand des Bedienelements;
- Fig. 7: eine Seitenansicht der Darstellung in Fig. 3;
- Fig. 8: eine Längsschnittdarstellung des Bedienelements in einer Grundstellung;
- Fig. 9: eine Längsschnittdarstellung der Ausführung in Fig. 3 in einem ersten Betätigungszustand des Bedienelements in vertikaler Richtung betrachtet;
- Fig. 10: eine Längsschnittdarstellung der Ausführung in Fig. 3 bei einer zweiten Betätigung des Bedienelements in vertikaler Richtung betrachtet.

In den Figuren werden gleiche oder funktionsgleiche Elemente mit den gleichen Bezugszeichen versehen.

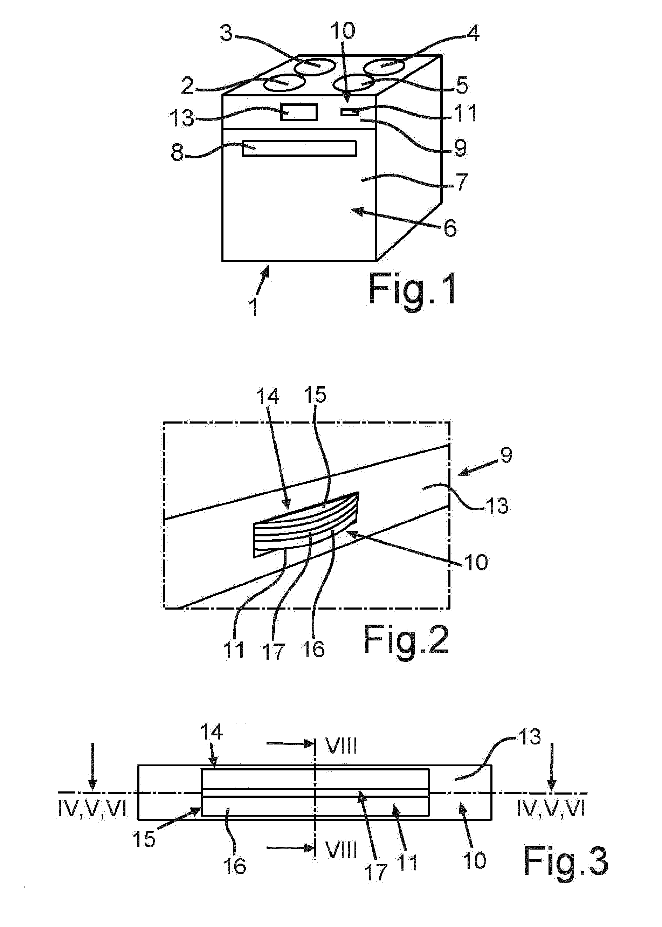

In Fig. 1 ist einer vereinfachten schematischen Darstellung ein Backofen 1 gezeigt, welcher Kochzonen 2, 3, 4 und 5 aufweist. Darüber hinaus ist ein Garraum 6 ausgebildet, der durch eine Tür 7, die einen frontseitigen Griff 8 aufweist, verschließbar ist. Im Ausführungsbeispiel ist oberhalb der Tür 7 eine Bedienblende 9 angeordnet, die eine Bedienvorrichtung 10 aufweist. Die Bedienvorrichtung 10 umfasst zumindest ein Bedienelement 11, welches nachfolgend noch näher erläutert wird. Darüber hinaus ist in der Bedienblende 9 eine Anzeigeeinheit 12 angeordnet. Sowohl Position als auch Ausgestaltung der Bedienvorrichtung 9 ist lediglich beispielhaft.

In Fig. 2 ist in perspektivischer Darstellung ein Teilausschnitt des Backofens 1 im Bereich des Bedienelements 11 gezeigt. In diesem Zusammenhang ist die Bedienblende 9 mit einer Frontseite 13 dargestellt. Die Bedienvorrichtung 10 umfasst eine Aufnahme 14, die frontseitig eine Öffnung aufweist, wobei die Öffnung gleich einer Öffnung 15 in der Frontseite 13 der Bedienblende 9 ist. Diese ist rechteckförmig und stellt quasi somit eine schlitzartige Öffnung dar. In der Aufnahme 14 ist das Bedienelement 11 angeordnet und so positioniert, dass es sich nach vorne über die Öffnung 15 herauserstreckt. Das Bedienelement 11 weist eine Frontseite 16 auf, die bogenförmig gekrümmt ist. Das Bedienelement 11 ist als plattenförmiges Streifenteil ausgebildet, welches insbesondere einen Ringabschnitt bildet. In der Frontseite 16 ist darüber hinaus ein Lichtemissionsbereich 17 ausgebildet, welcher sich im Ausführungsbeispiel als horizontaler Streifen über die gesamte Breite der Frontseite 16, die sich aus der Aufnahme 14 und der Öffnung 15 nach vorne herauserstreckt, ausgebildet ist.

In Fig. 3 ist in schematischer Darstellung eine Frontansicht der Bedienvorrichtung 10 insbesondere im Bereich des Bedienelements 11 gezeigt.

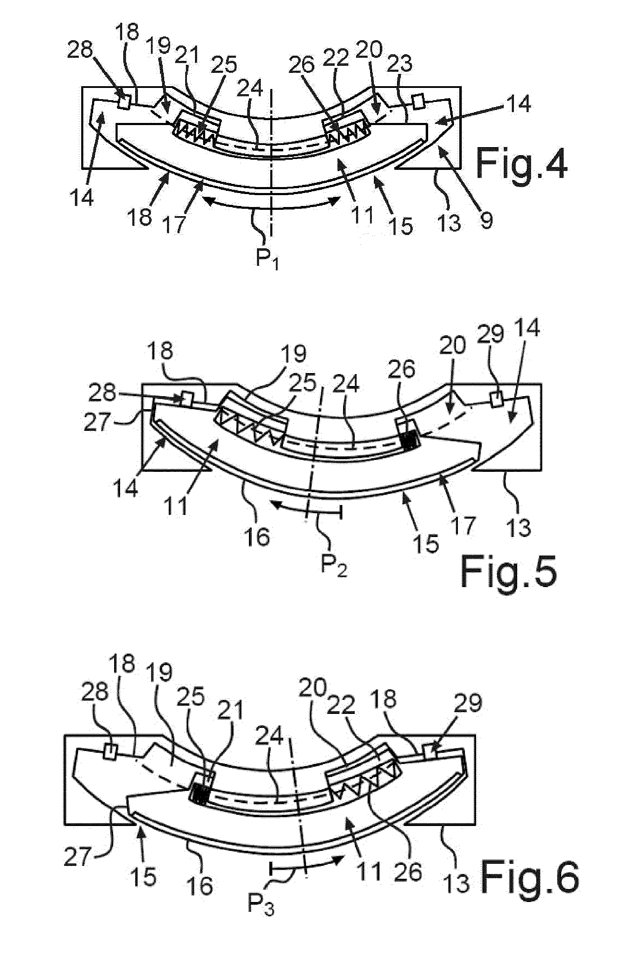

In Fig. 4 ist (in der Querschnittsdarstellung und somit in einer Schnittebene senkrecht zur Figurenebene in einer Darstellung gemäß Fig. 3 gemäß der Schnittlinie IV-IV) die Ausführung in Fig. 3 gezeigt. Das einen Ringabschnitt darstellende Bedienelement 11 ist zu erkennen. Des Weiteren ist die bogenförmige Ausgestaltung der Frontseite 16 gezeigt. Die Aufnahme 14 stellt einen Freiraum dar, in dem das Bedienelement 11 in der Darstellung in Fig. 4 in der Figurenebene gemäß der Pfeildarstellung P1 verschwenkbar ist. In Fig. 4 ist dabei die Grundstellung des Bedienelements 11 gezeigt. Es kann somit ausgehend von dieser Grundstellung in beide Richtungen innerhalb eines gewissen Winkelintervalls vorzugsweise in einem Winkelintervall von jeweils kleiner 10°, insbesondere 7°, verschwenkt werden. Somit kann ausgehend von der gezeigten Grundstellung jeweils zur Seite hin eine Schwenkbewegung um etwa 7° vorgenommen werden. Dazu kann der Nutzer die Frontseite 17 des Bedienelements 11 berühren und dann eine entsprechende Schwenkbewegung entlang einer Bogenbahn in einem Winkelelement durchführen. Wie zu erkennen ist, ist die seitliche und rückwärtige Kontur des Bedienelements in dieser Querschnittdarstellung an die Begrenzung bzw. Wandgeometrie der Aufnahme 14 angepasst. So ist in diesem Zusammenhang vorgesehen, dass an einer Rückseite 18 der Aufnahme 14 eine ersten Führungskulisse 19 und eine erste Führungskulisse 20 ausgebildet sind. In diese Führungskulissen 19 und 20 greifen Führungszapfen 21 und 22 ein, die an einer Rückseite 23 des Bedienelements 11 ausgebildet sind. Dadurch ist die Verschwenkung in einer ersten Ebene, welche in der Darstellung in Fig. 4 die Figurenebene ist, geführt. Durch die Ausmaße der Führungskulissen 19 und 20 entlang der Bogenbahn 24 sind die Anschläge und die vorab genannten Winkelbereiche für die Verschwenkung definiert und vorgegeben. Die Bogenbahn 24 definiert sich dabei insbesondere ausgehend von einem nicht gezeigten Mittelpunkt des Ringabschnitts des Bedienelements 11, wobei in diesem Mittelpunkt eine entsprechende Radiusbahn, die dann die Bogenbahn 24 darstellt, definiert ist.

Des Weiteren ist vorgesehen, dass das Bedienelement 11 mittels Federn 25 und 26 in der Aufnahme 14 gehalten ist. Durch eine derartige Ausgestaltung kann die automatische Rückführung des Bedienelements 11 bei Auslenkung aus der in Fig. 4 gezeigten Grundstellung vollzogen werden. Darüber hinaus wird die in Fig. 4 gezeigte Grundstellung durch diese Federn 25 und 26 gehalten. Wie zu erkennen ist, sind die Federn 25 und 26 vorzugsweise als Spiralfedern ausgebildet, deren Längsachsen sich im Wesentlichen entlang der Bogenbahn 24 erstrecken. Die Federn 25 und 26 sind vorzugsweise in Aussparungen in dem Bedienelement 11 versenkt angeordnet, so dass die ganze Ausgestaltung sehr kompakt und bauraumminimiert ist. Darüber hinaus werden durch diese Anordnung die Federn 25 und 26 quasi auch in einem Käfig gehalten. Wie zu erkennen ist, stützen sich die Federn 25 und 26 an Begrenzungswänden der Führungskulissen 19 und 20 ab.

Ausgehend von der Darstellung in Fig. 4 ist in Fig. 5 eine weitere Schnittdarstellung im Querschnitt gezeigt. Dies betrifft in der Darstellung in Fig. 4 einen Querschnitt entlang der Schnittlinie V-V. Der Schnittbereich ist daher gleich wie in Fig. 4, wobei in Fig. 5 das Bedienelement in einem ersten Betätigungszustand gezeigt ist.

Wie dabei zu erkennen ist, wurde das Bedienelement 11 gemäß der Pfeildarstellung P2 nach links und aus der Grundstellung heraus geschwenkt und entlang der Bogenbahn 24 bewegt. Dies erfolgt solange bis das linksseitige Ende 27 des Bedienelements 11 an seiner Endposition in der Aufnahme 14 angekommen ist. Dabei kontaktiert es einen elektrischen Schalter 28, der an der Rückseite 18 der Aufnahme 14 angeordnet ist. Dadurch werden die entsprechenden Schaltsignale für die gewünschte Betriebsbedingungseinstellung generiert.

Wird nun in dieser gemäß Fig. 5 gezeigten Endstellung das Bedienelement 11 sofort wieder losgelassen, so wird die Erzeugung der Schaltsignale wieder unterbrochen und dies durch eine nicht gezeigte Steuereinheit entsprechend erkannt. Die gewünschte Betriebsbedingungseinstellung, beispielsweise die Auswahl einer der Kochzonen 2 bis 5 und/oder des Garraums 6 kann dadurch erfolgen. Ist bereits eine derartige Funktionsteileeinheit ausgewählt kann andererseits vorgesehen sein, dass durch die Betätigung, wie sie in Fig. 5 gezeigt ist, ein Betriebsparameter dieser ausgewählten Funktionsteileinheit wertmäßig eingestellt wird. Beispielsweise kann dann die Temperatur eingestellt werden. In diesem Zusammenhang kann auch vorgesehen sein, dass bei der Einstellung von großen Wertdifferenzen das Bedienelement 11 in der in Fig. 5 gezeigten Endposition durch einen Nutzer dort gehalten wird und dabei entsprechende Schaltsignale dann dauerhaft erzeugt werden, wodurch ein automatisches und fortlaufendes Hochlaufen des Werts auf den gewünschten Wert erfolgt. Erst wenn der gewünschte Wert dann erreicht ist, wird durch Loslassen des Bedienelements 11 die Erzeugung der Schaltsignale unterbrochen und die gewünschte Werteinstellung erkannt und auf den dann erreichten Wert belassen.

Gemäß der Darstellung in Fig. 5 ist auch zu erkennen, dass durch dieses Ausschwenken in der ersten Ebene die Feder 25 gedehnt wird und die Feder 26 komprimiert wird. Wird dann das Bedienelement 11 in der Fig. 5 gezeigten ersten Endlage von dem Nutzer losgelassen so erfolgt aufgrund der Federvorspannungen eine automatische Rückführung in die in Fig. 4 gezeigte Grundstellung.

In Fig. 6 ist in ergänzender Darstellung eine weitere Schnittdarstellung im Querschnitt in Fig. 3 gezeigt. Dabei ist eine Schnittdarstellung entlang der Schnittlinie VI-VI gezeigt. Im Unterschied zur Darstellung gemäß Fig. 5 ist hier eine zweite Betätigungsrichtung des Bedienelements 11 gezeigt, so dass ausgehend von der Darstellung in Fig. 4 eine Auslenkung in die andere Richtung gemäß der Pfeildarstellung P3 erfolgt ist. Auch hier ist die Endposition dargestellt und auch hier ist an der Rückwand 18 der Aufnahme 14 ein weiteres Schaltelement 29 angeordnet, welches die kontaktierte Endlage des Bedienelements 11 und die damit verbundene und gewünschte Betriebsbedingungseinstellung detektiert.

Die beiden Schaltelemente 28 und 29 können einfache elektrische Kontakte jedoch andererseits aber auch Sensoren sein.

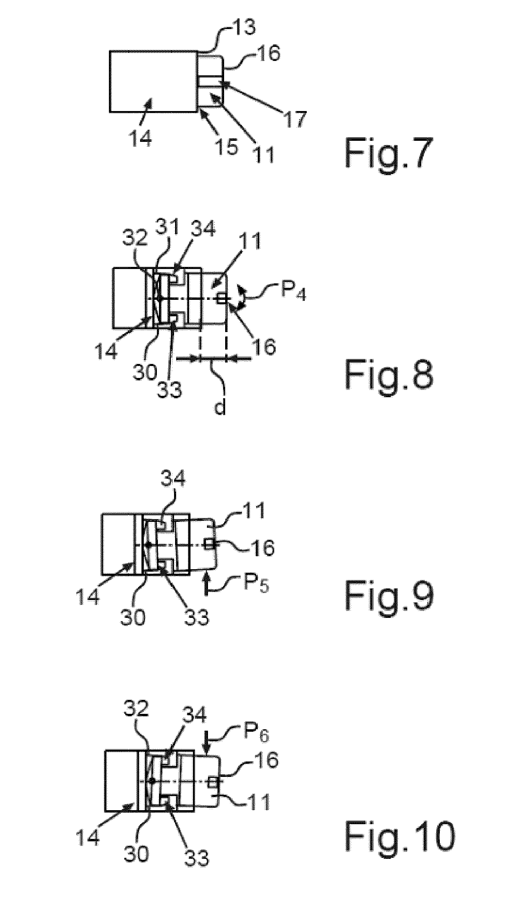

In Fig. 7 ist in einer Seitendarstellung die Ausführung gemäß Fig. 3 gezeigt. Es ist zu erkennen, dass das Bedienelement 11 über die Frontseite 13 der Bedienblende 9 nach vorne hinaus übersteht und somit auch aus der Aufnahme 14 und der Öffnung 15 nach vorne übersteht.

Neben der bereits zu den in Fig. 4 bis 6 erläuterten Betätigungsmöglichkeiten in der ersten Ebene kann eine weitere Betätigungsmöglichkeit des Bedienelements 11 in einer dazu senkrechten zweiten Ebene erfolgen. Dies bedeutet, dass das Bedienelement 11 nicht nur um die Bogenbahn 24 gedreht werden kann, sondern auch ausgehend von der Darstellung in Fig. 7 nach oben und nach unten gekippt werden kann. Auch hier sind vorzugsweise gegenüber der Horizontalen maximale Kippwinkel von jeweils kleiner 10°, insbesondere kleiner 5°, vorzugsweise 3° nach oben und nach unten vorgesehen.

In Fig. 8 ist eine Schnittdarstellung entlang der Schnittlinie VIII-VIII in Fig. 3 gezeigt, wobei hier das Bedienelement 11 wieder in der unbetätigten Grundstellung bzw. Ausgangsposition gezeigt ist. Durch die Pfeildarstellung P4 sind die angesprochenen Bewegungen nach oben und nach unten angedeutet. Darüber hinaus ist der Weg d, über den sich das Bedienelement 11 maximal nach vorne über die Öffnung 15 und auch die Frontseite 13 nach außen erstreckt eingezeichnet. Dieser beträgt maximal 1 cm, kleiner oder gleich 0,5 cm.

Gemäß der Darstellung in Fig. 8 ist zu erkennen, dass das Bedienelement 11 an seiner Rückseite wiederum in Führungskulissen 30 und 31 eingreift und dazu entsprechend, der Übersichtlichkeit dienend nicht näher gekennzeichnete Führungszapfen vorgesehen sind. Das Bedienelement 11 kann dann über einen Drehpunkt 32 nach oben oder nach unten gekippt werden. In der in Fig. 8 gezeigten Grundstellung ist das Bedienelement 11 mit elektrischen Kontakten beabstandet zu Schaltelementen 33 und 34 angeordnet, so dass in dieser Grundstellung auch keine Schaltsignale erzeugt werden.

Ausgehend von der Darstellung in Fig. 8 ist in Fig. 9 eine entsprechende Längsschnittdarstellung in Fig. 3 gezeigt, die an derselben Stelle wie die Schnittdarstellung VIII-VIII angebracht ist. Bei dieser Ausgestaltung ist ein Kippen nach oben entlang des Pfeils P5 ausgehend von der in Fig. 8 gezeigten Grundstellung durchgeführt. Dabei wird das Bedienelement 11 mit dem an einer Wand in der Aufnahme 14 ausgebildeten Schaltelement 33 kontaktiert und ein entsprechendes Schaltsignal erzeugt.

In Fig. 10 ist in einer analogen Schnittdarstellung zu Fig. 8 und Fig. 9 ein weiterer Betätigungszustand des Bedienelements 11 gezeigt, wobei hier ausgehend von der Darstellung in Fig. 8 eine Betätigung bzw. ein Kippen nach unten entlang des Pfeils P6 durchgeführt wird. Auch hier ist dann die nach unten gekippte Endstellung gezeigt, wobei elektrische Kontakte an dem Bedienelement 11 dann mit dem oberen Schaltelement 34 elektrisch kontaktiert sind. Auch hier können dann entsprechende Betriebsbedingungseinstellungen vorgenommen werden, wobei auch hier beispielsweise eine Auswahl von Funktionsteileinheiten oder ein Einstellen von Betriebsparametern, beispielsweise die Zeitdauer eines Betriebs einer ausgewählten Funktionsteileinheit eingestellt werden können.

### Bezugszeichenliste

- 1: Backofen
- 2, 3, 3, 5: Kochzonen
- 6: Garraum
- 7: Tür
- 8: Griff
- 9: Bedienblende
- 10: Bedienvorrichtung
- 11: Bedienelement
- 12: Anzeigeeinheit
- 13: Frontseite
- 14: Aufnahme
- 15: Öffnung
- 16: Frontseite
- 17: Lichtemissionsbereich
- 18: Rückseite
- 19: Führungskulisse
- 20: Führungskulisse
- 21, 22: Führungszapfen
- 23: Rückseite
- 24: Bogenbahn
- 25,26: Federn
- 27: linkssseitiges Ende
- 28: Schalter
- 29: Schaltelement
- 30, 31: Führungskulissen
- 32: Drehpunkt
- 33, 34: Schaltelemente

## Patentansprüche

1. Bedienvorrichtung für ein Hausgerät (1), welche ein Bedienelement (11) aufweist, das in einer Aufnahme (14) der Bedienvorrichtung (10) bewegbar angeordnet ist und abhängig von einer definierten Bewegung des Bedienelements (11) in der Aufnahme (14) eine Betriebsbedingungseinstellung des Hausgeräts (1) durchführbar ist, **dadurch gekennzeichnet, dass** das Bedienelement ein plattenförmiges Streifenelement (11) ist, welches eine bogenförmige Frontseite (16) aufweist, welche sich über eine frontseitige Öffnung (15) der Aufnahme (14) nach außen erstreckt.

2. Bedienvorrichtung nach Anspruch 1, **dadurch gekennzeichnet, dass** das plattenförmige Streifenelement (11) die Form eines Ringabschnitts aufweist.

3. Bedienvorrichtung nach Anspruch 1 der 2, **dadurch gekennzeichnet, dass** das Streifenelement (11) in der Aufnahme (14) in einer ersten Ebene bewegbar ist, welche durch die Ebene, in der sich das Streifenelement (11) erstreckt, gebildet ist.

4. Bedienvorrichtung nach Anspruch 3, **dadurch gekennzeichnet, dass** die Bewegungsmöglichkeit in der ersten Ebene eine Schwenkbewegung auf einer Bogenbahn (24) ist.

5. Bedienvorrichtung nach Anspruch 4, **dadurch gekennzeichnet, dass** die Schwenkbewegung auf der Bogenbahn (24) ausgehend von einer Grundstellung des Streifenelements (11) beidseits jeweils um einen Winkel kleiner 30°, insbesondere kleiner 10°, durchführbar ist.

6. Bedienvorrichtung nach einem der Ansprüche 3 bis 5, **dadurch gekennzeichnet, dass** das Streifenelement (11) zumindest einen Führungszapfen (21, 22) aufweist, der zur Bewegungsführung des Streifenelements (11) in der Aufnahme (14) in eine Führungskulisse (19, 20) der Aufnahme (14) eingreift.

7. Bedienvorrichtung nach Anspruch 6, **dadurch gekennzeichnet, dass** das Streifenelement (11) mittels einer Feder (25, 26) in einer Grundstellung in der Aufnahme (14) gehalten ist und bei einer Auslenkung in der ersten Ebene aus der Grundstellung die Feder (25, 26) vorgespannt ist, so dass bei Loslassen des Streifenelements (11) eine automatische Rückführung des Streifenelements (11) in die Grundstellung durch die Feder (25, 26) bewirkbar ist.

8. Bedienvorrichtung nach einem der vorhergehenden Ansprüche, **dadurch gekennzeichnet, dass** das Streifenelement (11) in der Aufnahme (14) in einer zweiten Ebene bewegbar ist, welche senkrecht zu einer ersten Ebene, in der sich das Streifenelement (11) erstreckt, orientiert ist.

9. Bedienvorrichtung nach Anspruch 8, **dadurch gekennzeichnet, dass** die Bewegungsmöglichkeit in der zweiten Ebene eine Kippbewegung ist.

10. Bedienvorrichtung nach einem der vorhergehenden Ansprüche, **dadurch gekennzeichnet, dass** an der Frontseite (16) ein Lichtemissionsbereich (17) ausgebildet ist.

11. Bedienvorrichtung nach Anspruch 10, **dadurch gekennzeichnet, dass** der Lichtemissionsbereich (17) abhängig von einer Betätigungsart des Steifenelements (11) aktivierbar ist und/oder abhängig von einer Betätigungsart des Streifenelements (11) im aktivierten Zustand zur Erzeugung von Lichtsignalen unterschiedlicher Lichtfarbe und/oder gepulste Lichtsignalen ausgebildet ist.

12. Bedienvorrichtung nach Anspruch 10 oder 11, **dadurch gekennzeichnet, dass** der Lichtemissionsbereich (17) streifenförmig ist und/oder sich über die gesamte Breite der Frontseite (16) erstreckt.

13. Hausgerät, insbesondere zum Zubereiten von Lebensmitten, mit einer Bedienvorric tung (10) nach einem der vorhergehenden Ansprüche.
